# EUROPEAN PATENT APPLICATION

(11) **EP 4 375 318 A1**
(43) Date of publication of application: **29.05.2024**
(21) Application number: 22855904.3
(22) Date of filing: 10.08.2022
(51) Int. Cl.: C08J 9/06, B29C 44/00, B32B 5/18, B65D 81/107

(54) **PACKING MATERIAL AND METHOD FOR PRODUCING PACKING MATERIAL**

(30) Priority: 11.08.2021 JP 2021131340
(71) Applicant: Sony Group Corporation, Tokyo 108-0075 (JP)
(72) Inventor: TABEI Yuuko, Tokyo 108-0075 (JP); TSUGAMI Takashi, Tokyo 108-0075 (JP); INAGAKI Yasuhito, Atsugi-shi, Kanagawa 243-0014 (JP); NISHIMURA Jun, Tokyo 108-0075 (JP); AIKO Kazuhiko, Tokyo 108-0075 (JP); YAGI Takayuki, Tokyo 108-0075 (JP); OKAMOTO Mitsuhiro, Tokyo 108-0075 (JP); AWATSUJI Satoshi, Tokyo 108-0075 (JP); KONISHI Yasunori, Tokyo 108-0075 (JP); WATANABE Tomonori, Tokyo 108-0075 (JP); HARA Kazuhiro, Tokyo 108-0075 (JP); KATSURAKU Junko, Tokyo 108-0075 (JP)
(74) Representative: D Young & Co LLP
(86) International application number: PCT/JP2022/030611
(87) International publication number: WO 2023/017842

(57) **Abstract**

There is provided a technology capable of controlling the occurrence of "migration" of a foam material to a contact object.

The present technology provides a package material containing: a fibrous material that includes waste paper and/or pulp; a binder; sodium hydrogen carbonate; a surfactant; and a water-soluble softener, the water-soluble softener being a urea derivative having a chemical structural formula of R¹, R²-N-CO-N-R³,R⁴ (R¹ to R⁴ are each H or a saturated and/or unsaturated hydrocarbon group having 1 to 4 carbon atoms) and/or a water-soluble polyhydric alcohol having 3 to 15 carbon atoms, the number of carbon atoms and the number of hydroxyl (OH) groups in a molecular structure of the water-soluble polyhydric alcohol satisfying a relationship of the number of hydroxy groups < the number of carbon atoms.

## Description

### Technical Field

The present technology relates to a package material, a foam material, a composite material, a multilayer structure, a cushioning material, and a recycled material, and methods of producing a package material, a foam material, and a composite material.

### Background Art

Many cushioning materials used for transporting office automation (OA) equipment, home appliances, and the like use a synthetic resin material as a raw material. Examples thereof include synthetic resin products such as polystyrene foam, a highly-foamed polyethylene sheet, foamed polyethylene, and an air cap.

Meanwhile, there is a worldwide demand for a cushioning material using an environmentally friendly and recyclable material as a raw material. Examples of the recyclable cushioning material include a cushioning material using paper. The cushioning material using paper as a raw material has a problem that the physical properties such as durability, elasticity, and resilience are inferior to those of a cushioning material using a synthetic resin material as a raw material.

Under such a background, in recent years, a technology for improving the physical properties of a cushioning material using recyclable paper as a raw material has been developed. For example, Patent Literature 1 discloses a light and elastic cushioning material characterized by including a foam molding product in which a paper component and a binder containing 50 weight! or more of gelatin or alginic acid are mixed.

Further, Patent Literature 2 discloses a foam molding product with less occurrence of avatar-like recesses on the surface and excellent elastic performance, which is obtained by kneading a fibrous material and an aqueous solution in which a binder mainly containing gelatin and/or glue with a jelly strength of 130 bloom or more is dissolved and performing foam-molding.

### Citation List

### Patent Literature

Patent Literature 1: Japanese Patent Application Laid-open No. 1998-152173
Patent Literature 2: Japanese Patent Application Laid-open No. 2002-293980

### Disclosure of Invention

### Technical Problem

As mentioned above, a foam material that has excellent elasticity and uses paper or the like as a raw material has been developed as a technology for improving the physical properties of a cushioning material using recyclable paper or the like as a raw material, but in fact, further improvement is expected. For example, there has been a problem that so-called "migration" occurs, i.e., when an existing foam material using paper as a raw material is preserved while being in contact with a resin, metal, or the like, chemicals seep out from the foam material or discoloration occurs on the contact object with the resin, metal, or the like due to the seepage of chemicals. In the case where the foam material in which migration occurs is used as a cushioning material for packaging a product, traces of the cushioning material remain in the portion where the product and the cushioning material come into close contact with each other, resulting in a defective product with a foreign substance attached.

Further, in the case where a foam material in which migration occurs and a different cushioning material are combined with each other to obtain a package material having a hybrid structure, there has been a problem that a component of the foam material migrates to the different cushioning material, which deteriorates the cushioning properties of the cushioning material.

In this regard, it is a main object of the present technology to provide a technology capable of controlling the occurrence of "migration" of a foam material to a contact object.

### Solution to Problem

The present inventors have conducted intense research on the occurrence of "migration" from a foam material using recyclable paper or the like as a raw material to a contact object using various components, found that the degree of "migration" from the foam material to the contact object changes depending on the type of softener, and completed the present technology.

That is, first, the present technology provides a foam material including: a fibrous material; a binder; a foam promotor; a surfactant; and a water-soluble softener.

As the softener used in the foam material according to the present technology, a urea derivative having a chemical structural formula of R¹,R²-N-CO-N-R³,R⁴ (R¹ to R⁴ are each H or a saturated and/or unsaturated hydrocarbon group having 1 to 4 carbon atoms) can be used.

Further, as the softener used in the foam material according to the present technology, a water-soluble polyhydric alcohol having 3 to 15 carbon atoms can also be used. In this case, as the polyhydric alcohol, the following polyhydric alcohol can be used, the number of carbon atoms and the number of hydroxyl (OH) groups in a molecular structure of the polyhydric alcohol satisfying a relationship of the number of hydroxy groups < the number of carbon atoms.

The foam material according to the present technology may include a discoloration inhibitor.

The foam material according to the present technology may include an antibacterial agent.

Next, the present technology provides a composite material including: a foam material that includes a fibrous material, a binder, a foam promotor, a surfactant, and a water-soluble softener; and
a member.

The present technology further provides a multilayer structure including:
a foam material layer including a foam material that includes a fibrous material, a binder, a foam promotor, a surfactant, and a water-soluble softener; and
an adhesive layer.

The foam material and composite material according to the present technology can be used as a cushioning material.

That is, the present technology provides
a cushioning material including: a foam material that includes a fibrous material, a binder, a foam promotor, a surfactant, and a water-soluble softener, and
a composite cushioning material including:
   a foam material that includes a fibrous material, a binder, a foam promotor, a surfactant, and a water-soluble softener; and
   a cushioning material.

The foam material and composite material according to the present technology can be used as a recycled material.

That is, the present technology provides
a recycled material including: a foam material that includes a fibrous material, a binder, a foam promotor, a surfactant, and a water-soluble softener, and
a composite recycled material including:
   a foam material that includes a fibrous material, a binder, a foam promotor, a surfactant, and a water-soluble softener; and
   a recycled material.

The present technology further provides a method of producing a foam material including:
a foaming step of foaming a mixture that includes a fibrous material, a binder, a foam promotor, a surfactant, and a water-soluble softener; and
a drying step of drying the foamed mixture after the foaming step.

The present technology further provides a method of producing a composite material including:
a foaming step of foaming a mixture that includes a fibrous material, a binder, a foam promotor, a surfactant, and a water-soluble softener;
an attachment step of attaching the foamed mixture after the foaming step to a member; and
a drying step of drying the foamed mixture after the attachment step.

In addition, the present technology provides a method of producing a multilayer structure including:
a foaming step of foaming a mixture that includes a fibrous material, a binder, a foam promotor, a surfactant, and a water-soluble softener;
a drying step of drying the foamed mixture after the foaming step; and
a stacking step of stacking a foam material after the drying step via an adhesive layer.

The present technology provides a package material including: a fibrous material that includes waste paper and/or pulp; a binder; sodium hydrogen carbonate; a surfactant; and a water-soluble softener.

As the softener used in the package material according to the present technology, a urea derivative having a chemical structural formula of R¹,R²-N-CO-N-R³,R⁴ (R¹ to R⁴ are each H or a saturated and/or unsaturated hydrocarbon group having 1 to 4 carbon atoms) can be used.

Further, as the softener used in the package material according to the present technology, a water-soluble polyhydric alcohol having 3 to 15 carbon atoms can also be used. In this case, as the polyhydric alcohol, the following polyhydric alcohol can be used, the number of carbon atoms and the number of hydroxyl (OH) groups in a molecular structure of the polyhydric alcohol satisfying a relationship of the number of hydroxy groups < the number of carbon atoms.

The package material according to the present technology may include a discoloration inhibitor. As the discoloration inhibitor, a discoloration inhibitor containing alum can be used.

Further, the package material according to the present technology may include an antibacterial agent. As the antibacterial agent, an antibacterial agent containing potassium sorbate can be used.

As the binder used in the package material according to the present technology, a binder containing polyvinyl alcohol can be used.

As the surfactant used in the package material according to the present technology, a surfactant containing polyoxyethylene alkylether can be used.

A structure layer in which a plurality of structures is formed on the first surface and/or the second surface of the base layer may be further provided.

A thickness of the structure layer may be larger than a thickness of the base layer.

The plurality of structure may be formed with intervals.

The package material may be bonded to a base material via an adhesive layer.

The present technology further provides a method of producing a package material:
a mixing step of mixing a composition at a first rotational speed, the composition including a fibrous material that includes waste paper and/or pulp, a binder, sodium hydrogen carbonate, a surfactant, and a water-soluble softener, the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms); and
a foaming step of foaming the composition at a second rotational speed that is faster than the first rotational speed.

The method of producing a package material according to the present technology may further include a molding step of molding the composition using a mold.

Further, the method of producing a package material according to the present technology may further include a drying step of drying the foamed composition.

As the mold used in the molding step, a mold containing silicon may be used.

The package material produced using the production method according to the present technology may be bonded a base material via an adhesive layer.

### Brief Description of Drawings

[Fig. 1] Fig. 1 is a flowchart of a first embodiment of a method of producing a foam material 1 used in the present technology.
[Fig. 2] Fig. 2 is a schematic diagram showing an example of an embodiment of the foam material 1 used in the present technology.
[Fig. 3] Fig. 3 is a schematic diagram showing an example of the embodiment of the foam material 1 used in the present technology, which is different from that in Fig. 2.
[Fig. 4] Fig. 4 is a photograph substituted for a drawing showing an example of the embodiment of the foam material 1 used in the present technology, which is different from those in Fig. 2 and Fig. 3.
[Fig. 5] Fig. 5 is a photograph substituted for a drawing showing an example of the embodiment of the foam material 1 used in the present technology, which is different from those in Fig. 2 to Fig. 4.
[Fig. 6] Fig. 6 is a photograph substituted for a drawing showing an example of the embodiment of the foam material 1 used in the present technology, which is different from those in Fig. 2 to Fig. 5.
[Fig. 7] Fig. 7 is a schematic diagram showing an example of a method of producing the foam material 1 used in the present technology.
[Fig. 8] Fig. 8 is a schematic diagram showing an example of the method of producing the foam material 1 used in the present technology, which is different from that in Fig. 7.
[Fig. 9] Fig. 9 is a flowchart of a second embodiment of the method of producing the foam material 1 used in the present technology.
[Fig. 10] Fig. 10 is a photograph substituted for a drawing showing an example of a composite material 2 used in the present technology.
[Fig. 11] Fig. 11 is a photograph substituted for a drawing showing an example of the composite material 2 used in the present technology, which is different from that in Fig. 10.
[Fig. 12] Fig. 12 is a flowchart of a first embodiment of a method of producing the composite material 2 used in the present technology.
[Fig. 13] Fig. 13 is a schematic diagram showing an example of the method of producing the composite material 2 used in the present technology.
[Fig. 14] Fig. 14 is a schematic diagram showing an example of the method of producing the composite material 2 used in the present technology, which is different from that in Fig. 13.
[Fig. 15] Fig. 15 is a schematic diagram showing a first embodiment of a multilayer structure 3 used in the present technology.
[Fig. 16] Fig. 16 is a schematic diagram showing a second embodiment of the multilayer structure 3 used in the present technology.
[Fig. 17] Fig. 17 is a schematic diagram showing a third embodiment of the multilayer structure 3 used in the present technology.
[Fig. 18] Fig. 18 is a schematic diagram showing a fourth embodiment of the multilayer structure 3 used in the present technology.
[Fig. 19] Fig. 19 is a schematic diagram showing a fifth embodiment of the multilayer structure 3 used in the present technology.
[Fig. 20] Fig. 20 is a schematic diagram showing a sixth embodiment of the multilayer structure 3 used in the present technology.
[Fig. 21] Fig. 21 is a flowchart of a first embodiment of a method of producing the multilayer structure 3 used in the present technology. Mode(s) for Carrying Out the Invention

Suitable embodiments for carrying out the present technology will be described below with reference to the drawings.

The embodiments described below show an example a typical embodiment of the present technology, and the scope of the present technology should not be interpreted narrowly thereby. Note that description will be made in the following order.
1. Foam material 1
   (1) Fibrous material
   (2) Binder
   (3) Foam promotor
   (4) Surfactant
   (5) Water-soluble softener
   (6) Discoloration inhibitor
   (7) Antibacterial agent
   (8) Others
   (9) Specific gravity
   (10) Application of foam material 1
2. Method of producing foam material 1

### [First embodiment]

(1) Defibration step S1
(2) Mixing step S2
(3) Foaming step S3
(4) Molding step S4
(5) Drying step S5

### [Second embodiment]

(6) Application step S6
(7) Stacking step S7
(8) Drying step S8
3. Composite material 2
(1) Base material (member) 21
(2) Application of composite material 2
4. Method of producing composite material 2
(1) Attachment step S9
(2) Drying step S10
5. Multilayer structure 3
(1) Adhesive layer 32
(2) Form of multilayer structure 3
(3) Application of multilayer structure 3
6. Method of producing stacked structure
(1) Application step S11
(2) Stacking step S12
(3) Drying step S13
(4) Molding step S14

As a package material according to the present technology, a foam material 1 described below can be used. The foam material 1 used as the package material according to the present technology will be described below.

### 1. Foam material 1

The foam material 1 used in the present technology includes: a fibrous material; a binder; a foam promotor; a surfactant; and a water-soluble softener. Further, it may further include other components such as a discoloration inhibitor and an antibacterial agent as necessary. Each component will be described below in detail.

### (1) Fibrous material

As a fibrous material used in the foam material 1 used in the present technology, one or two or more types of fibrous materials that can be used in the foam material can be freely selected and used as long as the effects of the present technology are not impaired. Examples thereof include waste paper such as newspaper, a magazine, a book, and cardboard, cotton fabric, wool fabric, pulp (bamboo, bagasse, straw, and the like), glass fiber, and chemical fiber. Among these, in the present technology, it is favorable to use waste paper such as newspaper, a magazine, a book, and cardboard from the viewpoint of recyclability.

More specifically, as the foam material 1 used in the present technology, it is favorable to use a fibrous material that includes waste paper and/or pulp. By using a fibrous material that includes waste paper and/or pulp, it is possible to improve the recyclability. Examples of the waste paper include newspaper, a magazine, a book, and cardboard as described above. Examples of the pulp include wood and non-wood. Examples of the non-wood include bamboo, bagasse, and straw.

The length of the fibrous material used in the present technology can be freely set as long as the effects of the present technology are not impaired. For example, a fibrous material defibrated to a length of 0.3 to 1.2 mm, favorably 0.3 to 1.0 mm, more favorably 0.5 to 1.0 mm, can be used.

### (2) Binder

As the binder used in the foam material 1 used in the present technology, one or two or more types of binders that can be used in a foam material can be freely selected and used as long as the effects of the present technology are not impaired. Examples thereof include polyvinyl alcohol, polyethylene glycol, carboxymethyl cellulose, methyl cellulose, polyethylene succinate, polybutylene succinate, polybutylene succinate-adipate, polycaprolactone, cellulose acetate, polylactic acid, starch, an alginate, gum arabic, glue, gelatin, and egg white. Among these, it is favorable to use polyvinyl alcohol (PVA) from the viewpoint of promoting the crosslinking reaction.

The content of the binder in the foam material 1 used in the present technology is not particularly limited as long as the effects of the present technology are not impaired, but is favorably 10 to 100 parts by mass, more favorably 15 to 70 parts by mass, with respect to 100 parts by mass of the fibrous material.

### (3) Foam promotor

As the foam promotor used in the foam material 1 used in the present technology, one or two or more types of foam promotors that can be used in the foam material can be freely selected and used as long as the effects of the present technology are not impaired. Examples thereof include an azo compound such as azodicarbonamide (ADCA), a nitroso compound such as N,N'-dinitrosopentamethylenetetramine (DPT), 4,4-oxybis(benzenesulfonylhydrazide) (OBSH), a hydrazine derivative such as hydrazodicarbonamide (HDCA), an azo compound such as barium azodicarboxylate (Ba/AC), and a bicarbonate such as sodium hydrogen carbonate (baking soda). Among these, it is favorable to use sodium hydrogen carbonate (baking soda) from the viewpoint of availability and economy.

In the present technology, by using sodium hydrogen carbonate (baking soda) as a foam promotor, it is possible to reduce the specific gravity of the foam material using a fibrous material that includes waste paper and/or pulp, and thus improve cushioning properties and the like.

The content of the foam promotor in the foam material 1 used in the present technology is not particularly limited as long as the effects of the present technology are not impaired, but is favorably 0.5 to 15 parts by mass, more favorably 1 to 10 parts by mass, with respect to 100 parts by mass of the fibrous material.

### (4) Surfactant

As the surfactant used in the foam material 1 used in the present technology, one or two or more types of surfactants that can be used in the foam material can be freely selected and used as long as the effects of the present technology are not impaired. Examples thereof include polyoxyethylene alkylether, sodium alkylsulfate, alkyltrimethylammonium chloride, and alkyldiaminoethylglycine chloride. Among these, it is favorable to use polyoxyethylene alkylether from the viewpoint of promoting foaming.

The content of the surfactant in the foam material 1 used in the present technology is not particularly limited as long as the effects of the present technology are not impaired, but is favorably 0.1 to 5 parts by mass, more favorably 0.3 to 3 parts by mass, with respect to 100 parts by mass of the fibrous material.

### (5) Water-soluble softener

The foam material 1 used in the present technology is characterized by using a water-soluble softener. In the present technology, it has been found that the occurrence of "migration" from the produced foam material 1 to a contact object can be controlled in accordance with the type of water-soluble softener. That is, it has been found that the occurrence of "migration" from the produced foam material 1 to a contact object can be reduced by changing the type of water-soluble softener.

As the water-soluble softener that can be used in the foam material 1 according to the present technology, one or two or more types of water-soluble softeners that can be used in the foam material can be freely selected and used as long as the effects of the present technology are not impaired. Examples thereof include: urea, a urea derivative; polyhydric alcohols such as glycerin, ethylene glycol, diethylene glycol, polyethylene glycol, polyvinyl alcohol, propylene glycol, and butylene glycol; a saccharide such as sucrose and trehalose; sugar alcohols such as sorbitol; and amines such as triethanolamine.

By changing the types and combinations of these water-soluble softeners, it is possible to control the occurrence of "migration" from the produced foam material 1 to a contact object.

In the case where the purpose is to reduce "migration", it is favorable to use a softener having a weak hydrogen bonding force due to its structure. Using a softener having a structure with a weak hydrogen bonding force prevents "migration" due to the hydrogen bond from occurring. For example, since the hydrogen bonding force satisfies the relationship of O-H > N-H, the occurrence of "migration" from the produced foam material 1 to a contact object can be reduced more by using a softener having an imino group (NH group) than a softener having a hydroxy group (OH group).

Further, in the case of chemical substances having a hydroxy group (OH group), the lower the ratio of the number of hydroxyl (OH) groups to the number of carbon atoms, the lower the hydrogen bonding force becomes, and the occurrence of "migration" from the produced foam material 1 to a contact object can be reduced more. Therefore, in the case of using polyhydric alcohols, it is favorable to use the following polyhydric alcohol, the number of carbon atoms and the number of hydroxyl (OH) groups in a molecular structure of the polyhydric alcohol satisfying a relationship of the number of hydroxy groups < the number of carbon atoms.

Considering the above, specifically, among the above softeners, it is favorable to use urea, a urea derivative; propylene glycol, 1,3-butylene glycol among polyhydric alcohols having 3 to 15 carbon atoms; and sucrose, and trehalose.

In the case of using urea or a urea derivative, it is favorable to use a urea derivative having a chemical structural formula of R¹,R²-N-CO-N-R³,R⁴ (R¹ to R⁴ are each H or a saturated and/or unsaturated hydrocarbon group having 1 to 4 carbon atoms). This is because the urea derivative in which the number of carbon atoms in the saturated and/or unsaturated hydrocarbon group is four or less definitely exhibits water solubility.

The content of the water-soluble softener in the foam material 1 according to the present technology is not particularly limited as long as the effects of the present technology are not impaired, but is favorably 0.03 to 150 parts by mass, more favorably 0.05 to 100 parts by mass, with respect to 100 parts by mass of the fibrous material.

Incidentally, a foam material using a fibrous material that includes waste paper and/or pulp requires a softener for imparting elasticity, and glycerin has been generally used as the softener. However, when a foam material using glycerin is used as a cushioning material for parts using a resin, metal, or the like over a long period of time, a "migration" phenomenon in which the parts become discolored occurs in some cases. A technology for improving the "migration" phenomenon from the foam material is being developed. However, since the softener significantly affects the cushioning power of the foam material, it has been difficult to apply an existing technology for improving the "migration" phenomenon to the foam material using a fibrous material that includes waste paper and/or pulp until now. Under such a background, the present inventors have successfully suppressed the "migration" phenomenon while maintaining favorable cushioning properties even with the foam material using a fibrous material that includes waste paper and/or pulp, by using a specific softener.

From such a viewpoint, as the softener used in the foam material 1 used in the present technology, it is favorable to use a urea derivative having a chemical structural formula of R¹,R²-N-CO-N-R³,R⁴ (R¹ to R⁴ are each H or a saturated and/or unsaturated hydrocarbon group having 1 to 4 carbon atoms), and/or a water-soluble polyhydric alcohol (propylene glycol, butylene glycol, or the like) having 3 to 15 carbon atoms, the number of carbon atoms and the number of hydroxyl (OH) groups in a molecular structure of the water-soluble polyhydric alcohol satisfying a relationship of the number of hydroxy groups < the number of carbon atoms. The urea derivative in which the number of carbon atoms of the saturated and/or unsaturated hydrocarbon group is four or less definitely exhibits water solubility. In the case of chemical substances having a hydroxy group (OH group), the lower the ratio of the number of hydroxyl (OH) groups to the number of carbon atoms, the lower the hydrogen bonding force becomes, and the occurrence of "migration" from the produced foam material 1 to a contact object can be reduced more.

### (6) Discoloration inhibitor

A discoloration inhibitor can be used in the foam material 1 used in the present technology. As the discoloration inhibitor used in the foam material 1 used in the present technology, one or two or more types of discoloration inhibitors that can be used in the foam material can be freely selected and used as long as the effects of the present technology are not impaired. Examples thereof include alum, magnesium, iron, and copper. Among these, it is favorable to use alum from the viewpoint of availability, ease of handling, and economy.

The content of the discoloration inhibitor in the foam material 1 used in the present technology is not particularly limited as long as the effects of the present technology are not impaired, but is favorably 0.5 to 5 parts by mass, more favorably 1 to 3 parts by mass, with respect to 100 parts by mass of the fibrous material.

### (7) Antibacterial agent

An antibacterial agent can be used in the foam material 1 used in the present technology. As the antibacterial agent used in the foam material 1 used in the present technology, one or two or more types of antibacterial agents that can be used in the foam material can be freely selected and used as long as the effects of the present technology are not impaired. Examples thereof include potassium sorbate, isopropylmethylphenol, and salicylic acid. Among these, it is favorable to use potassium sorbate from the viewpoint of handling such as water solubility.

The content of the antibacterial agent in the foam material 1 used in the present technology is not particularly limited as long as the effects of the present technology are not impaired, but is favorably 0.1 to 1.5 parts by mass, more favorably 0.15 to 1 parts by mass, with respect to 100 parts by mass of the fibrous material.

### (8) Other components

One or two or more types of additives that can be used in the foam material can be freely selected and used in the foam material 1 used in the present technology as necessary. Examples thereof include a crosslinking accelerator, a release agent, a pH adjuster, a pH buffer, an antifungal agent, a coloring agent, a bleach, an antioxidant, a weathering (light-resistance) agent, a flame retardant, and a filler.

### (9) Specific gravity

The specific gravity of the foam material 1 used in the present technology can be freely set in accordance with the application and purpose. The specific gravity of the foam material 1 used in the present technology after the stirring step is, for example, 0.3 to 0.5, favorably 0.3 to 0.4. By setting the specific gravity of the foam material 1 within this range, it is possible to further improve impact resistance, resilience after impact, and the like.

Note that in the present technology, the specific gravity is a value measured in accordance with JIS Z8804.

### (10) Application of foam material 1

The application of the foam material 1 used in the present technology described above is not particularly limited. However, the foam material 1 can be suitably used for applications such as a cushioning material, a package material, a sound absorbing material, a sound insulation material, a soundproofing material, a vibration isolating material, a thermal insulation material, wallpaper, a seat for automobiles, a curing material, and an agricultural material.

Further, by using a recyclable material as the above-mentioned fibrous material, it can be expected to be used as a recycled material.

### 2. Method of producing foam material 1

The method of producing the foam material 1 used in the present technology is a method of performing at least a mixing step S2 and a foaming step S3. Further, a defibration step S1, a molding step S4, a drying step S5, an application step S6, a stacking step S7, a drying step S8, and the like may be performed as necessary. Details of each step will be described below in chronological order.

### [First embodiment]

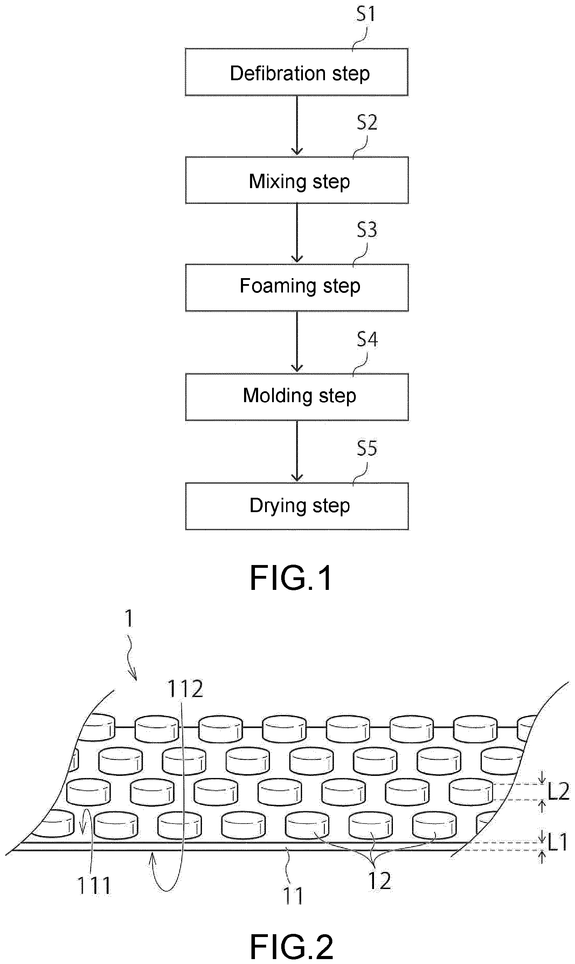

Fig. 1 is a flowchart of a first embodiment of the method of producing the foam material 1 used in the present technology.

### (1) Defibration step S1

A defibration step S1 is a step of defibrating a fibrous material that is a raw material of the foam material 1 used in the present technology. Note that in the case of using a fibrous material that has been defibrated, this defibration step S1 is not essential.

In the present technology, as the defibration method, one or two or more types of general defibration methods can be used in combination as long as the effects of the present technology are not impaired. For example, both a wet defibration method and a dry defibration method can be used. As a specific method of defibration, cutting, crushing, smashing, impact crushing, crushing with ultrasonic waves, and the like can be freely combined and used in accordance with the type of raw material.

### (2) Mixing step S2

A mixing step S2 is a step of mixing various components used in the foam material 1 according to the present technology. Specifically, it is a step of mixing a fibrous material, a binder, a foam promotor, a surfactant, a water-soluble softener, and, as necessary, other components such as a discoloration inhibitor and an antibacterial agent.

Note that the mixing step S2 can also be performed simultaneously with the foaming step S3 described below. That is, foaming may be performed simultaneously while mixing the various components.

### (3) Foaming step S3

A foaming step S3 is a step of foaming a mixture of the various components used in the foam material 1 according to the present technology. Specifically, it is a step of foaming a mixture of a fibrous material, a binder, a foam promotor, a surfactant, a water-soluble softener, and, as necessary, other components such as a discoloration inhibitor and an antibacterial agent.

As the foaming method in the foaming step S3, one or two or more types of general foaming methods can be combined and used as long as the effects of the present technology are not impaired. Examples thereof include a method of foaming the mixture while stirring and mixing, a method of foaming by forcing gas into the mixture, and a method of foaming the mixture by adding a foaming agent or the like.

Specifically, in the mixing step S2, a composition containing the various components used in the foam material 1 used in the present technology can be mixed at a first rotational speed. More specifically, in the mixing step S2, a composition containing a fibrous material, a binder, sodium hydrogen carbonate, a surfactant, a water-soluble softener, and, as necessary, other components such as a discoloration inhibitor and an antibacterial agent can be mixed at the first rotational speed.

Note that the mixing step S2 includes a case where foaming occurs simultaneously while mixing the composition containing the various components. That is, foaming may be started while mixing the composition at the first rotational speed in the mixing step S2, and foaming may be further performed while mixing the composition at a second rotational speed in the foaming step S3 described below.

In the foaming step S3, the composition containing the various components used in the present technology can be foamed at the second rotational speed faster than the first rotational speed. More specifically, the foaming step S3 is a step of foaming a composition containing a fibrous material, a binder, sodium hydrogen carbonate, a surfactant, a water-soluble softener, and, as necessary, other components such as a discoloration inhibitor and an antibacterial agent at the second rotational speed faster than the first rotational speed.

In order to reduce the specific gravity of the foam material using a fibrous material that includes waste paper and/or pulp for the purpose of improving the cushioning properties or the like thereof, it has been necessary to take measures, e.g., the materials used in the foam material are added separately when mixing the materials or mixing is performed in a stepwise manner by changing the rotational speed for mixing, which complicates the production step. Meanwhile, the present inventors have successfully produced, by using sodium hydrogen carbonate (baking soda) as a foam promotor, a foam material having excellent cushioning properties and small specific gravity by mixing each material at once and in one stage without changing the rotational speed.

### (4) Molding step S4

A molding step S4 is a step of molding the composition (foamed mixture) into a desired shape. As the molding method in the molding step S4, one or two or more types of general molding methods can be combined and used as long as the effects of the present technology are not impaired. Examples thereof include injection molding, extrusion molding, press molding, blow molding, calendar molding, and casting molding.

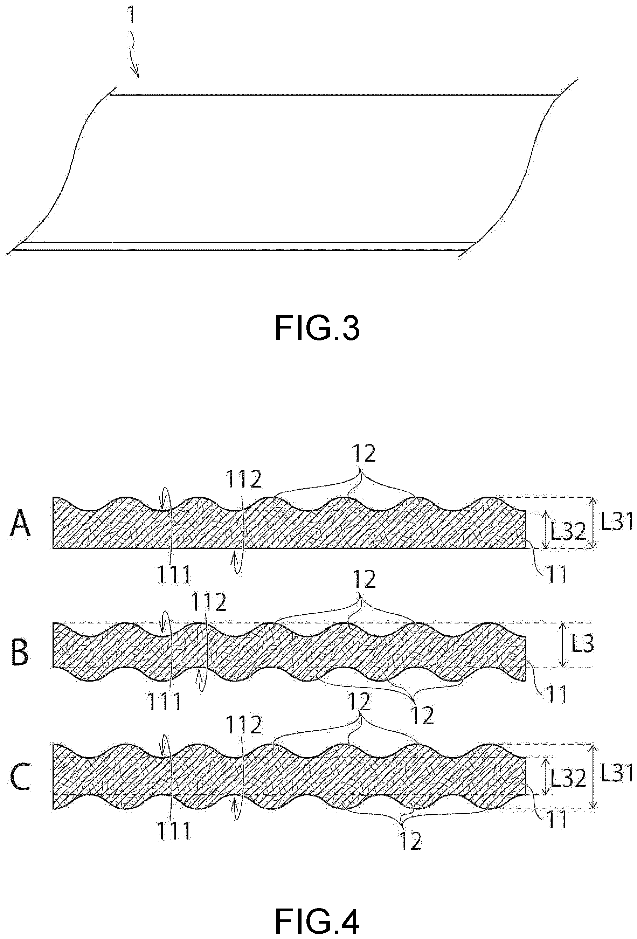

The specific shape to be molded in the molding step S4 is not particularly limited, and can be freely designed in accordance with the application of the foam material 1 to be produced, and the like. For example, it can be molded into a form that is suitable for an air cap as shown in Fig. 2, a simple sheet shape as shown in Fig. 3, a form having a wavy projecting portion on one or both sides as shown in Parts A to C of Fig. 4, or the like.

The foam material 1 used as the package material according to the present technology can include a sheet-shaped base layer 11 having a first surface 111 and a second surface 112. A thickness L1 of the base layer 11 can be freely designed in accordance with the application and purpose of the foam material 1. The thickness L1 of the base layer 11 is, for example, 1 mm or more, favorably 2 mm or more, and can be 3 mm considering the cushioning properties and moldability. By setting the thickness L1 of the base layer 11 within this range, it is possible to further improve the strength of the foam material 1.

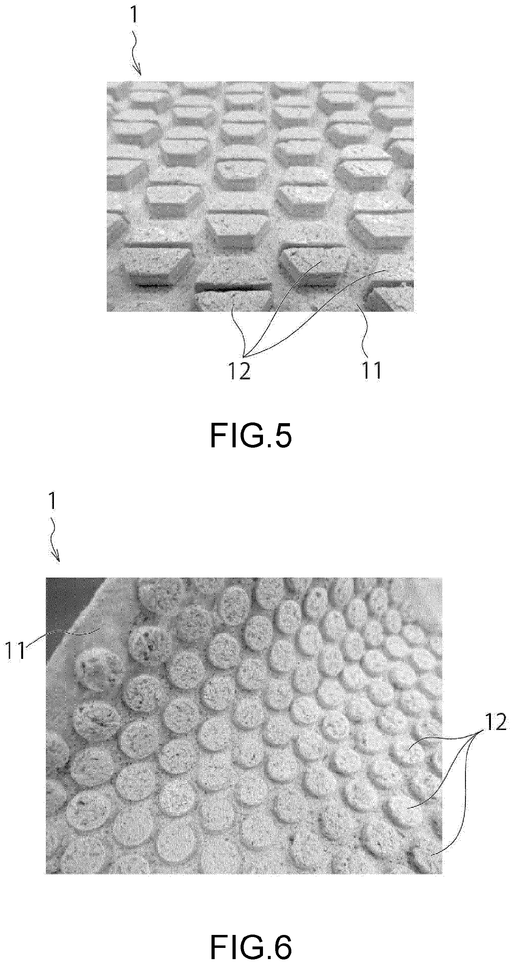

A plurality of structures 12 can be formed on the first surface 111 and/or the second surface 112 of the base layer 11. The shape of the structure 12 is not particularly limited, and the structure 12 can be formed into the shape shown in Fig. 2 and Fig. 4, the shape shown in Fig. 5 described below, or the like. Further, although not shown, the structures 12 of different shapes can be combined or the plurality of structures 12 can be formed in different shapes. Further, the plurality of structures 12 can be formed with intervals.

The thickness of the structure 12 can also be freely designed in accordance with the application and purpose of the foam material 1. A thickness L2 of the structure 12 can be, for example, 2 to 10 mm, can be favorably 8 to 10 mm in the case of the shape shown in Fig. 5 described below, for example, and can be favorably 2 to 6 mm in the case of the shape shown in Fig. 6 described below, for example. By setting the thickness L2 of the structure 12 within this range, it is possible to further improve the strength of the foam material 1.

In the foam material 1 used as the package material according to the present technology, the thickness L2 of the structure 12 is favorably larger than the thickness L1 of the base layer 11. By setting the thickness L2 of the structure larger than the thickness L1 of the base layer 11, it is possible to further improve impact resistance, resilience after impact, and the like.

A thickness L3 of the foam material 1, which is the sum of the thickness L1 of the base layer 11 and the thickness L2 of the structure 12, may be a constant thickness as shown in Part B of Fig. 4, or a structure including a thick portion L31 and a thin portion L32 may be provided as shown in Parts A and C of Fig. 4.

In the foam material 1 used as the package material according to the present technology, the surface roughness of one or more surfaces selected from the first surface111 and the second surface112 of the base layer 11 and the surface of the structure 12 can also be freely designed in accordance with the application and purpose of the foam material 1.

In the molding step S4, a mold can be used. As the material of the mold used in the present technology, various materials can be used as long as the effects of the present technology are not impaired. As the material of the mold that can be used in the present technology, both an organic material and an inorganic material can be used. Examples thereof include a silicone resin, an acrylic resin, a metal, a glass material, and a ceramic material. In the present technology, it is favorable to use a mold containing silicon such as a silicone resin from the viewpoint that the drying step can be performed with the composition poured into the mold. By using the mold containing silicon, the mold releasability and transferability are improved, it is possible to improve the surface quality of each surface of the foam material 1 after molding.

### (5) Drying step S5

A drying step S5 is a step of drying the composition (foamed mixture) after the foaming step S3 after molding in the molding step S4, as necessary. As the drying method in the drying step S5, one or two or more types of general drying methods can be combined and used as long as the effects of the present technology are not impaired. Examples thereof include methods such as natural drying, heat drying, hot air drying, vacuum drying, freeze drying, dehumidification drying, and microwave drying.

An example of the foam material 1 produced by performing the above steps is shown in the photographs substituted for a drawing of Fig. 5 and Fig. 6. The example shown in Fig. 5 and Fig. 6 is an example in which the foam material 1 was produced by molding using a mold containing silicon in the molding step S4.

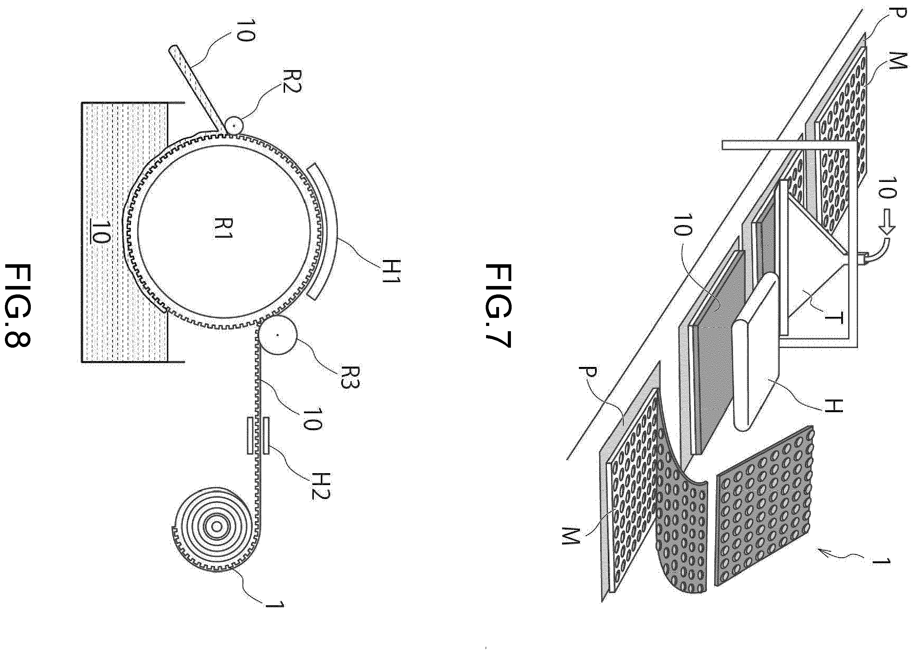

Fig. 7 is a schematic diagram showing an example of the method of producing the foam material 1 used in the present technology. The production method shown in Fig. 7 is an example of molding using a belt conveyor and a mold. The foam material 1 used as the package material according to the present technology can be produced by pouring a composition (foamed mixture) 10 that has been subjected to the mixing step S2 and the foaming step S3 into a mold M using an extruder T such as a T die, drying it using a drier H such as a heater in this state, and then peeling off the foam material 1 from the mold M.

At this time, from the viewpoint of improving moldability and improving the design and surface roughness of the produced foam material 1, the mold M favorably includes a hole for letting air out. Further, for example, it is favorable to lay a porous sheet P such as a sheet made of a mesh material under the mold M.

Note that although the drying step S5 is performed with the composition (foamed mixture)10 poured into the mold M in the example shown in Fig. 7, the present technology is not limited thereto. Rough drying may be performed with the composition (foamed mixture) 10 poured into the mold M to the extend that the mold M can be peeled off, and main drying may be performed after being peeled off from the mold M.

Fig. 8 is a schematic diagram showing an example of the method of producing the foam material 1 used in the present technology, which is different from that in Fig. 7. The production method shown in Fig. 8 is an example of molding using a roller R. Part of a first roller R1 including recesses and projections on the surface thereof is immersed in a tank containing the composition (foamed mixture) 10 that has been subjected to the mixing step S2 and the foaming step S3 to deposit the composition (foamed mixture) 10 on the surface of the first roller R1. At this time, the recesses and projections on the surface of the roller R1 may include holes through which the composition (foamed mixture) 10 does not flow, and the composition (foamed mixture) 10 may be deposited on the surface of the first roller R1 by suctioning from inside the roller R1.

The foam material 1 used as the package material according to the present technology can be produced by smoothing the surface of the composition (foamed mixture) 10 deposited on the surface of the first roller R1 using the second roller R2, a belt saw (not shown), or the like, performing rough drying using the first drier H1 such as a heater, then taking it up using a third roller R3 or the like, and performing main drying using the second drier H2 such as a heater.

Note that although the foam material 1 is peeled off from the first roller R1 after rough drying is performed using the first drier H1 on the first roller R1, and then main drying is performed using the second drier H2 in the example shown in Fig. 8, the present technology is not limited thereto. It is also possible that the foam material 1 is peeled off from the first roller R1 after completely drying is performed using the first drier H1 on the first roller R1. Further, by providing a heating mechanism to the first roller R1, drying can be performed using only the heat of the first roller R1 without suing the drier H1.

### [Second embodiment]

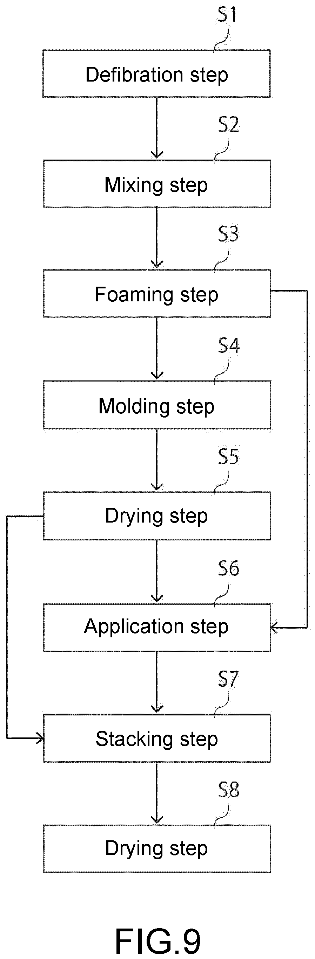

Fig. 9 is a flowchart of a second embodiment of the method of producing the foam material 1 used in the present technology. The method of producing the foam material 1 according to the second embodiment is a method of further performing the application step S6, the stacking step S7, and the drying step S8 in addition to the steps performed in the production method according to the first embodiment.

### (6) Application step S6

An application step S6 is a step of applying the composition (foamed mixture) 10 after the foaming step S3 onto the surface of the foam material 1 produced by the production method according to the first embodiment. As the application method in the application step S6, one or two or more types of general application methods can be combined and used as long as the effects of the present technology are not impaired. Examples thereof include methods such as roll coating, kiss coating, spray coating, brush painting, and transfer using a stamp.

### (7) Stacking step S7

A stacking step S7 is a step of stacking the foam material 1 produced by the production method according to the first embodiment on the surface on which the composition (foamed mixture) 10 has been applied in the application step S6. That is, in the stacking step S7, the foam material 1, the composition (foamed mixture) 10 before drying, and the foam material 1 are stacked in this order. At this time, the composition (foamed mixture) 10 before drying sandwiched between the foam materials 1 functions as an adhesive for adhering the foam materials 1 to each other.

### (8) Drying step S8

A drying step S8 is a step of drying the stacked body after the stacking step S7. In the drying step S8, the composition (foamed mixture) 10 sandwiched between the foam materials 1 is dried, since the foam material 1 has actually already been dried. Since the drying method in the drying step S8 is similar to that in the above-mentioned drying step S5, description thereof is omitted here.

The larger the thickness of the composition (foamed mixture) 10, the longer the drying time in the above-mentioned drying step S5. In this regard, by performing the drying step S8 while the foam materials 1 that have already been produced are adhered to each other using the composition (foamed mixture) 10 before drying as in the production method according to the second embodiment, it is possible to efficiently produce the foam material 1 having a large thickness.

### 3. Composite material 2

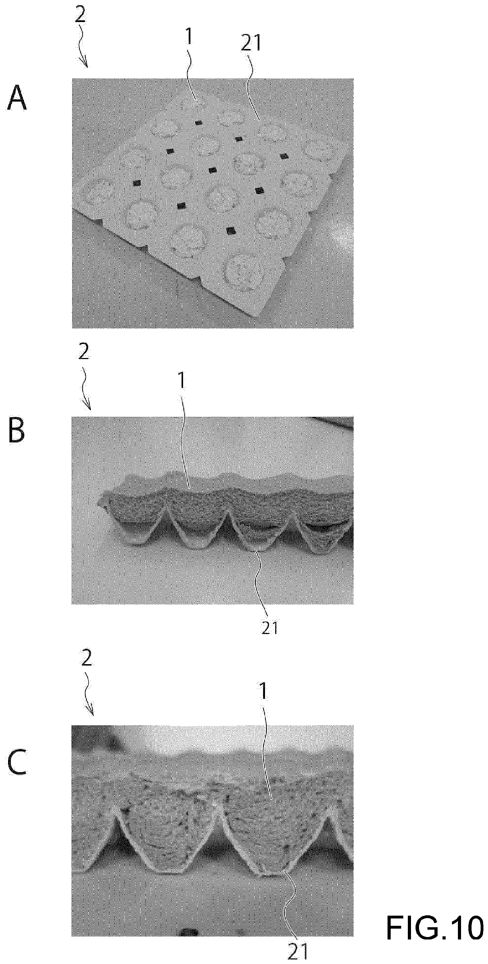

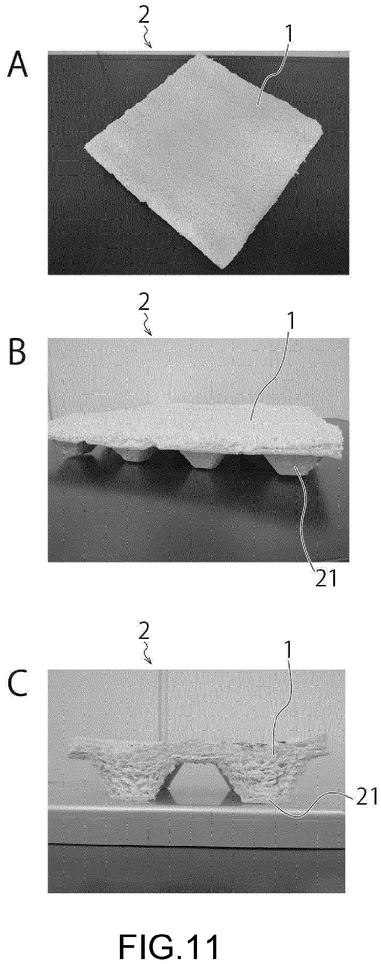

Fig. 10 and Fig. 11 are each a photograph substituted for a drawing showing an example of a composite material 2 that can be used as the package material according to the present technology. The composite material 2 used in the present technology includes the above-mentioned foam material 1 used in the present technology and a base material (member) 21.

### (1) Base material (member) 21

The base material (member) 21 of the composite material 2 used in the present technology is not particularly limited as long as the effects of the present technology are not impaired, and the base material (member) 21 using any material can be used. As the material of the base material (member) 21 that can be used in the present technology, waste paper such as newspaper, a magazine, a book, and cardboard; pulp such as bamboo, bagasse, and straw; fabric such as cotton fabric, wool fabric, and chemical fiber fabric; a resin, and the like can be used. In the present technology, it is favorable to use the base material (member) 21 including waste paper and/or pulp. By using a fibrous material that includes waste paper and/or pulp, it is possible to improve the recyclability. Examples of the waste paper include newspaper, a magazine, a book, and cardboard as described above. Examples of the pulp include wood and non-wood. Examples of the non-wood include bamboo, bagasse, and straw.

The example shown in Fig. 10 and Fig. 11 is an example using a pulp mold as the base material (member) 21. The pulp mold is a recyclable base material (member) 21 using waste paper such as cardboard as a raw material, but has a problem that it has no resilience and low cushioning properties. However, by combining it with the foam material 1 used in the present technology, the composite material 2 to which resilience is imparted can be obtained and it is possible to improve cushioning properties.

The method of bonding the foam material 1 and the base material 21 is not particularly limited as long as the effects of the present technology are not impaired. For example, they can be bonded via an adhesive layer or they can be bonded by bonding the composition (foamed mixture) 10 before drying to the base material 21 and then drying it. Note that since the adhesive layer is the same as an adhesive layer 32 of a multilayer structure 3 described below, description thereof is omitted here.

### (2) Application of composite material 2

The application of the composite material 2 used in the present technology is not particularly limited. For example, it can be suitably used for applications such as a cushioning material, a package material, a sound absorbing material, a sound insulation material, a soundproofing material, a vibration isolating material, a thermal insulation material, wallpaper, a seat for automobiles, a curing material, and an agricultural material.

Further, by using a recyclable material as the base material (member) 21, it can be expected to be used as a recycled material.

### 4. Method of producing composite material 2

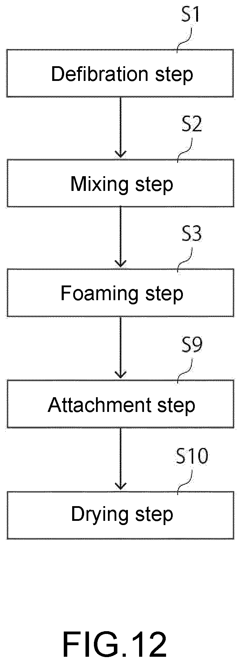

Fig. 12 is a flowchart of a first embodiment of the method of producing the composite material 2 used in the present technology. The method of producing the composite material 2 used in the present technology is a method of performing at least the foaming step S3, an attachment step S9, and a drying step S10. Further, the defibration step S1, the mixing step S2, and the like may be performed as necessary. Details of each step will be described below. Note that since the defibration step S1, the mixing step S2, and the foaming step S3 are the same as the defibration step S1, the mixing step S2, and the foaming step S3 in the above-mentioned method of producing the foam material 1 used in the present technology, description thereof is omitted here.

### (1) Attachment step S9

An attachment step S9 is a step of attaching the composition (foamed mixture) 10 after the foaming step S3 to the base material (member) 21 before the drying step S10 described below. In the attachment step S9, the specific method is not particularly limited as long as the composition (foamed mixture) 10 before drying can be brought into contact with another base material (member) 21. Examples thereof include a method of attaching by stacking the composition (foamed mixture) 10 before drying to the base material (member) 21, a method of attaching by applying the composition (foamed mixture) 10 before drying to the base material (member) 21, and a method of attaching by filling a predetermined portion of the base material 21 with the composition (foamed mixture) 10 before drying.

### (2) Drying step S10

A drying step S10 is a step of drying the composition (foamed mixture) 10 after the attachment step S9. By drying the composition (foamed mixture) 10 before drying while it is attached to another base material (member) 21, the foam material 1 is formed while being bonded to the base material (member) 21. That is, the composite material 2 including the foam material 1 and the base material (member) 21 can be produced. Since the drying method in the drying step S10 is similar to that in the above-mentioned drying step S5, description thereof is omitted here.

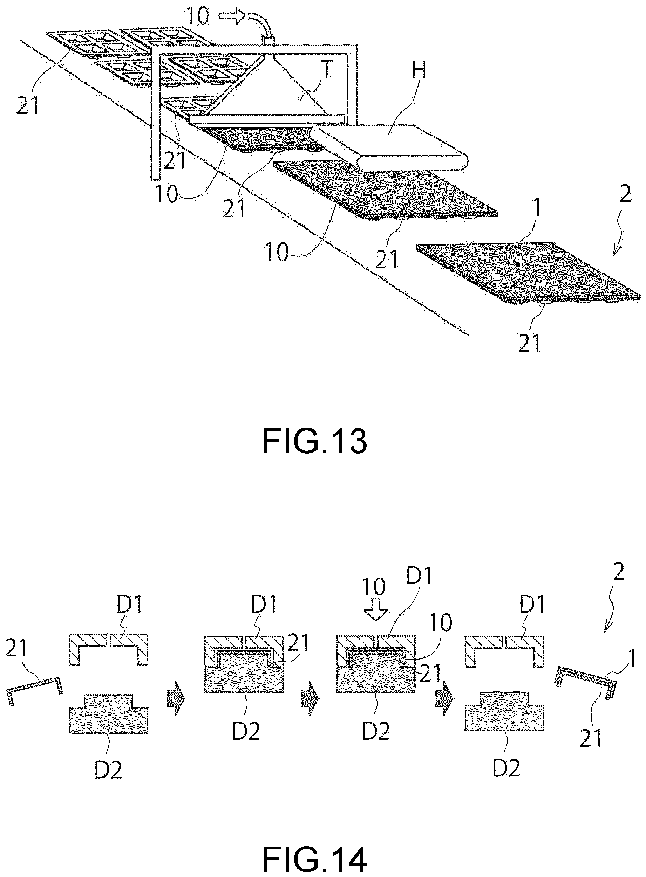

Fig. 13 is a schematic diagram showing an example of a method of producing the composite material 2 used as the package material according to the present technology. The production method shown in Fig. 13 is an example of molding using a belt conveyor. The composite material 2 used as the package material according to the present technology can be produced by pouring the composition (foamed mixture) 10 that has been subjected to the mixing step S2 and the foaming step S3 into the base material (member) 21 using the extruder T such as a T die and performing drying using the drier H such as a heater in this state.

At this time, for example, by using the base material (member) 21 made of a material having air permeability, such as a pulp mold, as the base material (member) 21, it is possible to improve moldability and improve the design and surface roughness of the produced foam material 1 because when the composition (foamed mixture) 10 is poured into the base material (member) 21, air can be let out from the base material (member) 21.

Fig. 14 is a schematic diagram showing an example of the method of producing the composite material 2 used as the package material according to the present technology, which is different from that in Fig. 13. The production method shown in Fig. 14 is an example of performing injection molding using a mold. The composite material 2 used as the package material according to the present technology can be produced by, for example, injecting and drying the composition (foamed mixture) 10 that has been subjected to the mixing step S2 and the foaming step S3 while the base material (member) 21 is set in a fixed mold D1 using a movable mold.

### 5. Multilayer structure 3

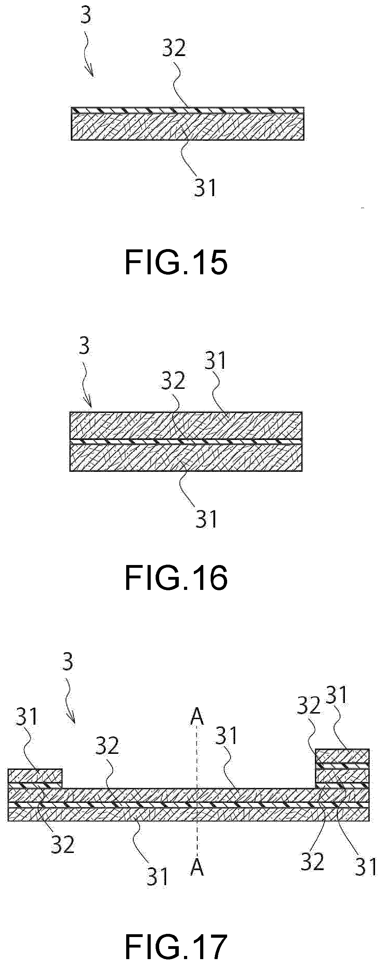

Fig. 15 is a schematic diagram showing a first embodiment of a multilayer structure 3 that can be used as the package material according to the present technology. The multilayer structure 3 used in the present technology includes a foam material layer 31 including the above-mentioned foam material 1 used in the present technology, and an adhesive layer 32.

### (1) Adhesive layer 32

The material forming the adhesive layer 32 is not particularly limited as long as the foam materials 1 can be bonded to each other or the foam material 1 and another base material (member) 21 can be bonded to each other, and various materials having adhesive properties can be used. For example, an adhesive made of a resin can be used. Examples of the resin forming an adhesive include an urethane resin, a polyolefin resin, an acrylic resin, and an epoxy resin, and these resins can be used alone or used in combination. Further, as in the above-mentioned method of producing the foam material 1 according to the second embodiment, the foamed mixture before drying may be used as an adhesive layer.

### (2) Form of multilayer structure 3

The multilayer structure 3 used in the present technology only needs to include at least one or more foam material layers 31 and one or more adhesive layers 32, and the number of each layer is not particularly limited. As in the multilayer structure 3 according to the first embodiment shown in Fig. 15, a structure including one foam material layer 31 and one adhesive layer 32, in which the foam material layer 31 and another base material (member) 21 (not shown) are bonded to each other via the adhesive layer 32, for example, may be provided.

Further, for example, as in the multilayer structure 3 according to the second embodiment shown in Fig. 16, a structure in which the foam material layers 31 are bonded to each other via the adhesive layer 32 may be provided.

Further, the foam material layer 31 and the adhesive layer 32 may each include two or more layers. For example, as in the multilayer structure 3 according to a third embodiment shown in Fig. 17, a structure in which different numbers of layers are freely combined in accordance with the application of the multilayer structure 3, or the like may be provided.

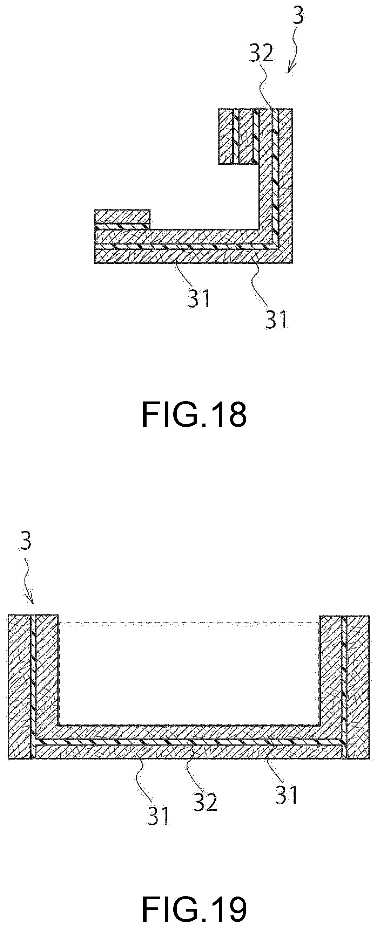

Further, for example, the multilayer structure 3 according to the third embodiment shown in Fig. 17 can also be bent along the line A-A in Fig. 17 to form the multilayer structure 3 according to a fourth embodiment shown in Fig. 18.

In addition, for example, in the case where the multilayer structure 3 is used as a package material as in the multilayer structure 3 according to a fifth embodiment shown in Fig. 19, the stacked structure may be formed in accordance with the shape of the product to be packaged (indicated by a broken line in the figure).

### (3) Application of multilayer structure 3

The application of the multilayer structure 3 used in the present technology described above is not particularly limited. For example, it can be suitably used for applications such as a cushioning material, a package material, a sound absorbing material, a sound insulation material, a soundproofing material, a vibration isolating material, a thermal insulation material, wallpaper, a seat for automobiles, a curing material, and an agricultural material.

Further, by using a recyclable material as the above-mentioned adhesive layer 32, it can be expected to be used as a recycled material.

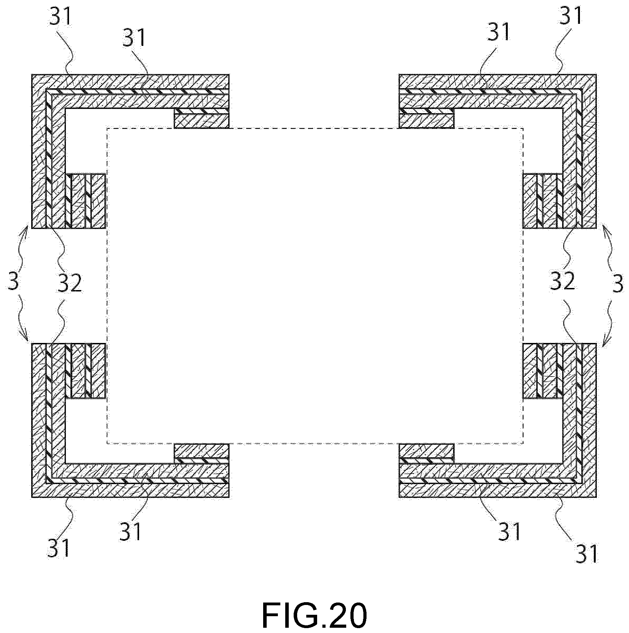

The multilayer structure 3 used in the present technology can be used for various applications in a state in which a plurality of multilayer structures 3 is combined. For example, in the case where the multilayer structure 3 is used as a package material as in the multilayer structure 3 according to a sixth embodiment shown in Fig. 20, a product to be packaged (indicated by a broken line in the figure) can be packaged using a plurality of multilayer structures 3.

### 6. Method of producing multilayer structure 3

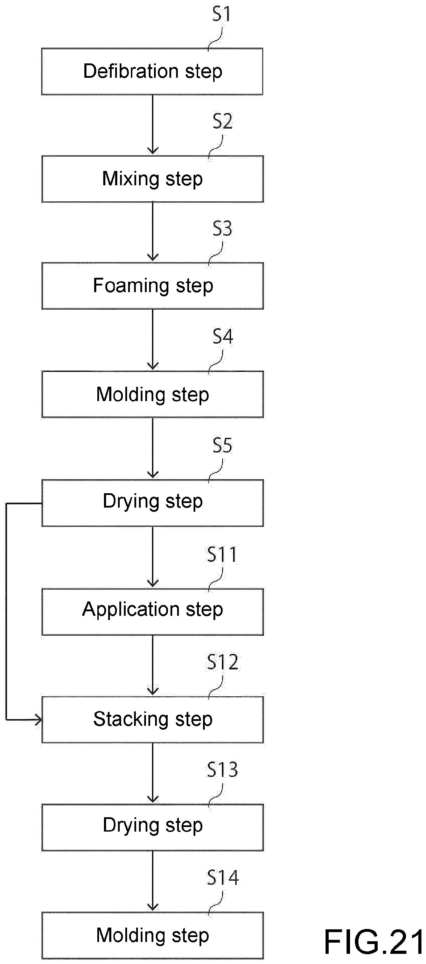

Fig. 21 is a flowchart of a first embodiment of a method of producing the multilayer structure 3 used in the present technology. The method of producing the multilayer structure 3 used in the present technology is a method of performing at least the foaming step S3, the drying step S5, and a stacking step S12. Further, the defibration step S1, the mixing step S2, the molding step S4, an application step S11, a drying step S13, a molding step S14, and the like may be performed as necessary. Details of each step will be described below. Note that since the defibration step S1, the mixing step S2, the foaming step S3, and the molding step S4 are the same as the defibration step S1, the mixing step S2, the foaming step S3, and the molding step S4 in the above-mentioned method of producing the foam material 1 used in the present technology, description thereof is omitted here.

### (1) Application step S11

An application step S11 is a step of applying an adhesive onto the surface of the foam material 1 produced through the drying step S5. Since the application method in the application step S11 is similar to that in the above-mentioned application step S6, description thereof is omitted here.

### (2) Stacking step S12

A stacking step S12 is a step of stacking the foam materials 1 after the drying step via an adhesive layer. That is, in the stacking step S12, the foam material 1, an adhesive, and the foam material 1 are stacked in this order.

### (3) Drying step S13

A drying step S13 is a step of forming the adhesive layer 32 by drying the adhesive after the stacking step S12. Since the drying method in the drying step S13 is similar to that in the above-mentioned drying step S5, description thereof is omitted here.

### (4) Molding step S14

A molding step S14 is a step of molding the produced multilayer structure 3 into a desired form. For example, as described above, the multilayer structure 3 according to the third embodiment shown in Fig. 17 can be bent along the line A-A in Fig. 17 to form the multilayer structure 3 according to the fourth embodiment shown in Fig. 18. The molding method performed in the molding step S14 is not limited to the method of molding by bending. Examples thereof include molding by cutting, molding by adhesion, molding by stacking, and molding by combining them.

### Examples

The present technology will be described below in more detail on the basis of Examples. Note that the Examples described below show an example of a typical Examples of the present invention, and the present technology should not be interpreted narrowly thereby.

### <Experimental Example 1>

In Experimental Example 1, the effects of a difference of materials to be used in a foam material on the various the physical properties have were investigated.

### (1) Production of foam material

After weighing out and mixing the materials shown in the following Table 1 and Table 2, the composition (foamed mixture) 10 was prepared while stirring and mixing using a whisk. The composition (foamed mixture) 10 was rolled out into a plate shape and subjected to natural drying under the conditions of a temperature of 23°C and humidity of 50% for 20 hours to produce foam materials of samples 1 to 7.

### (2) Production of composite material

After weighing out and mixing the materials shown in the following Table 1 and Table 2, the composition (foamed mixture) 10 was prepared while stirring and mixing using a whisk. The recessed portion of a pulp mold was filled with the foamed mixture, and the foamed mixture was subjected to natural drying under the conditions of a temperature of 23°C and humidity of 50% for 20 hours to produce a composite material of a sample 8 (see the photograph of Part A of Fig. 10).

**[Table 1]**

| | | |
|---|---|---|
| Paper material | Type | Cardboard waste paper (pre-pulverized) |
| | Addition amount(g) | 100 |
| Binder | Type | Polyvinyl alcohol(PVA) |
| | Addition amount(g) | 34(Water:425) |
| Surfactant | Type | Polyoxyethylene alkylether("HITENOL" (registered trademark) manufactured by DKS Co. Ltd.) |
| | Addition amount(g) | 0.9(Water:100) |
| Discoloration inhibitor | Type | Alum |
| | Addition amount(g) | 1.75(Water:35) |
| Antifungal agent/ antibacterial agent | Type | Potassium sorbate |
| | Addition amount(g) | 0.34 |
| Foam promotor | Type | Sodium hydrogen carbonate (baking soda) |
| | Addition amount(g) | 5 |
| Softener | Type | See Table 2 |
| | Addition amount(g) | |

### (2) Evaluation

Impact resistance, resilience after impact, flexibility (moisturizing properties), migration properties of each foam material were evaluated in accordance with the following evaluation criteria.

### <Impact resistance>

On the basis of JIS standard Z0235, test pieces with a length of 150 ± 5 mm, a width of 150 ± 5 mm, and a thickness of 50 ± 5 mm were created using the produced foam materials, left to stand for 16 hours or more under the conditions of a temperature of 23 ± 2°C and humidity of 50 ± 5%, and then the state of each foam material when a weight was dropped from a free fall of 60 cm was observed.
∘: The foam material was not destroyed
×: The foam material was destroyed

### <Resilience after impact>

After the impact resistance test, the state of the foam material after the iron ball was removed was observed.
∘: The foam material quickly returned to its original shape
×: The foam material did not return to its original shape even after a while

### <Flexibility (moisturizing properties)>

Cushioning properties of the produced foam material were evaluated in accordance with the following criteria.
∘: Cushioning properties were maintained
×: Cushioning properties were impaired

### <Migration properties>

After preserving the produced foam material for 24 hours in the 65 ± 2°C and 90 to 95% high temperature high humidity conditions while being in contact with a stainless steel plate, the occurrence of "migration of the foam material" on the plate was observed.
1: Completely migrated
2: Migration occurred
3: Migration occurred, but it was removed by wiping it off
4: Lightly migrated
5: Not migrated at all

### (3) Results

Results are shown in Table 2.

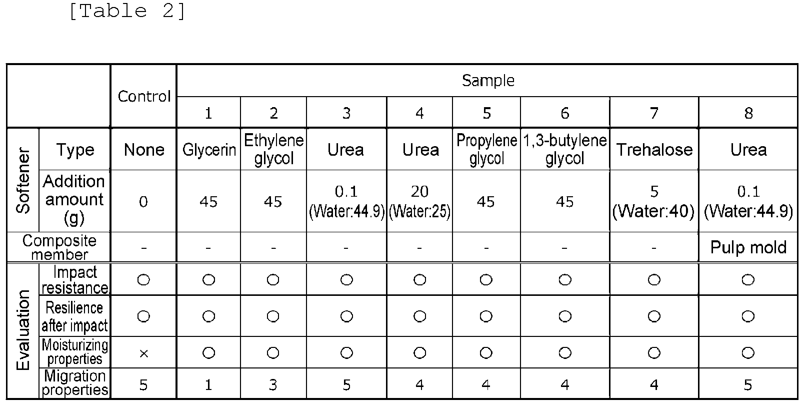

As shown in Tale 2, the control with no softener added had a favorable evaluation for migration properties, but a poor evaluation for moisturizing properties and poor foaming properties. Meanwhile, as shown in the samples 1 to 8, it was found that by mixing softener, favorable foaming and drying conditions could be obtained, moisturizing properties were improved, and elastic effects and cushioning properties of the foam material were improved.

Further, as shown in the samples 1 to 7, it was found that the degree of "migration" from the foam material to the contact object changes depending on the type of softener. Specifically, it was shown that the samples 3 to 6 and 8 in which urea, which is a urea derivative having a chemical structural formula of R¹,R²-N-CO-N-R³,R⁴ (R¹ to R⁴ are each H or a saturated and/or unsaturated hydrocarbon group having 1 to 4 carbon atoms), or propylene glycol or butylene glycol, which is a water-soluble polyhydric alcohol having 3 to 15 carbon atoms, the number of carbon atoms and the number of hydroxyl (OH) groups in a molecular structure of the polyhydric alcohol satisfying a relationship of the number of hydroxy groups < the number of carbon atoms, was used had higher evaluations for migration properties, i.e., were capable of suppressing the occurrence of "migration", as compared with the samples 1 and 2 in which glycerin or ethylene glycol was used.

### <Experimental Example 2>

In Experimental Example 2, the effects of a difference of materials to be used in a foam material and a difference of production methods on the specific gravity were investigated.

### (1) Production of foam material

Foam material of samples 9 to 12 were produced by the following method.

### [Sample 9]

A form material of a sample 9 was produced by adding an antifungal agent/antibacterial agent after stirring the materials (paper material·binder·surfactant·softener) other than the antifungal agent/antibacterial agent·discoloration inhibitor·foam promotor, of the materials of the samples 3, at low speed (rotational speed of 180 rpm or less) for 1 minute, stirring them at medium speed (rotational speed of 100 to 300 rpm) for 2 minutes, further adding a discoloration inhibitor, and stirring them at high speed (rotational speed of 320 to 400 rpm) for 2 minutes.

### [Sample 10]

A foam material of a sample 10 was produced by stirring the materials of the sample 3 at low speed (rotational speed of 180 rpm or less) for 1 minute and then stirring them at high speed (rotational speed of 320 to 400 rpm) for 2.5 minutes.

### [Sample 11]

A foam material of a sample 11 was produced by stirring the materials (paper material·binder·surfactant·discoloration inhibitor·antifungal agent/antibacterial agent·softener) other than the foam promotor, of the materials of the sample 3, at low speed (rotational speed of 180 rpm or less) for 1 minute and then stirring them at high speed (rotational speed of 320 to 400 rpm) for 2.5 minutes.

### [Sample 12]

A foam material of a sample 12 was produced by further stirring the foam material of the sample 11 at high speed (rotational speed of 320 to 400 rpm) for 0.5 minutes.

### (2) Measurement of specific gravity

Measurement was performed on the composition (foamed mixture) 10 after the stirring step of the samples 9 to 12 in accordance with JIS Z8804. Specifically, the specific gravity of the composition (foamed mixture) 10 of each sample was measured after the third stirring, second stirring, second stirring, and third stirring in the cases of the sample 9, sample 10, sample 11, and sample 12, respectively.

### (3) Results

Results are shown in Table 3.

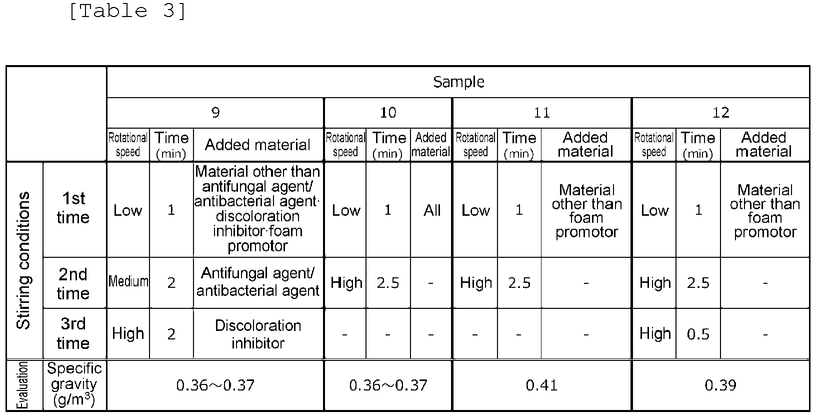

As shown in Table 3, as the sample 9 in which sodium hydrogen carbonate (baking soda), which is a foam promotor, is not used, a foamed mixture having low specific gravity was produced by adding an antifungal agent/antibacterial agent and a discoloration inhibitor in a stepwise manner and adjusting the stirring speed. Meanwhile, as the sample 10 in which sodium hydrogen carbonate (baking soda), which is a foam promotor, was used, a foamed mixture having low specific gravity could be produced even in the case where all the materials were added at once. Meanwhile, as the sample 11 in which sodium hydrogen carbonate (baking soda), which is a foam promotor, was not used, a foamed mixture having high specific gravity was produced in the case where it was produced by the same production method as that for the sample 10. As shown in the sample 12, by further stirring at high speed, the specific gravity of the foamed mixture was reduced, but it was higher than those in the samples 9 and 10.

From this result, it was found that by using sodium hydrogen carbonate (baking soda), which is a foam promotor, it was possible to produce a foam material having low specific gravity with a simple production method.

It should be noted that the present technology may also take the following configurations.
(1) A foam material that includes a fibrous material, a binder, a foam promotor, a surfactant, and a water-soluble softener.
(2) The foam material according to (1), in which
   the softener is a urea derivative having a chemical structural formula of R¹,R²-N-CO-N-R³,R⁴ (R¹ to R⁴ are each H or a saturated and/or unsaturated hydrocarbon group having 1 to 4 carbon atoms).
(3) The foam material according to (1) or (2), in which
   the softener is a water-soluble polyhydric alcohol in which the number of carbon atoms is four or more.
(4) The foam material according to (3), in which
   the number of carbon atoms and the number of hydroxyl (OH) groups in a molecular structure of the polyhydric alcohol satisfies a relationship of the number of hydroxy groups < the number of carbon atoms.
(5) The foam material according to any one of (1) to (4), further including
   a discoloration inhibitor.
(6) The foam material according to any one of (1) to (5), further including
   an antibacterial agent.
(7) A composite material, including:
   a foam material that includes a fibrous material, a binder, a foam promotor, a surfactant, and a water-soluble softener; and
   a member.
(8) A multilayer structure, including:
   a foam material layer including a foam material that includes a fibrous material, a binder, a foam promotor, a surfactant, and a water-soluble softener; and
   an adhesive layer.
(9) A cushioning material, including:
   a foam material that includes a fibrous material, a binder, a foam promotor, a surfactant, and a water-soluble softener.
(10) A composite cushioning material, including:
   a foam material that includes a fibrous material, a binder, a foam promotor, a surfactant, and a water-soluble softener; and
   a cushioning material.
(11) A recycled material, including:
   a foam material that includes a fibrous material, a binder, a foam promotor, a surfactant, and a water-soluble softener.
(12) A composite recycled material, including:
   a foam material that includes a fibrous material, a binder, a foam promotor, a surfactant, and a water-soluble softener; and
   a recycled material.
(13) A method of producing a foam material, including:
   a foaming step of foaming a mixture that includes a fibrous material, a binder, a foam promotor, a surfactant, and a water-soluble softener; and
   a drying step of drying the foamed mixture after the foaming step.
(14) A method of producing a composite material, including:
   a foaming step of foaming a mixture that includes a fibrous material, a binder, a foam promotor, a surfactant, and a water-soluble softener;
   an attachment step of attaching the foamed mixture after the foaming step to a member; and
   a drying step of drying the foamed mixture after the attachment step.
(15) A method of producing a multilayer structure, including:
   a foaming step of foaming a mixture that includes a fibrous material, a binder, a foam promotor, a surfactant, and a water-soluble softener;
   a drying step of drying the foamed mixture after the foaming step; and
   a stacking step of stacking a foam material after the drying step via an adhesive layer.
(16) A package material, including:
   a fibrous material that includes waste paper and/or pulp;
   a binder;
   sodium hydrogen carbonate;
   a surfactant; and
   a water-soluble softener,
   the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms).
(17) A package material, including:
   a fibrous material that includes waste paper and/or pulp;
   a binder;
   sodium hydrogen carbonate;
   a surfactant; and
   a water-soluble softener,
   the softener being a water-soluble polyhydric alcohol having 3 to 15 carbon atoms,
   the number of carbon atoms and the number of hydroxyl (OH) groups in a molecular structure of the polyhydric alcohol satisfying a relationship of the number of hydroxy groups < the number of carbon atoms.
(18) The package material according to (16) or (17), further including
   a discoloration inhibitor.
(19) The package material according to (18), in which
   the discoloration inhibitor contains alum.
(20) The package material according to any one of (16) to (19), further including
   an antibacterial agent.
(21) The package material according to (20), in which
   the antibacterial agent contains potassium sorbate.
(22) The package material according to any one of (16) to (21), in which
   the binder contains polyvinyl alcohol.
(23) The package material according to any one of (16) to (22), in which
   the surfactant contains polyoxyethylene alkylether.
(24) A package material, including:
   a fibrous material that includes waste paper and/or pulp;
   polyvinyl alcohol;
   sodium hydrogen carbonate;
   polyoxyethylene alkylether; and
   a water-soluble softener,
   the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms).
(25) The package material according to any one of (16) to (24), further including
   a base layer having a thickness of 1 mm or more, the base layer having a sheet shape having first and second surfaces.
(26) The package material according to (25), further including
   a structure layer in which a plurality of structures is formed on the first surface and/or the second surface of the base layer.
(27) The package material according to (26), in which
   a thickness of the structure layer is larger than a thickness of the base layer.
(28) The package material according to (26) or (27), in which
   the plurality of structure is formed with intervals.
(29) The package material according to any one of (16) to (28), in which
   the package material is bonded to a base material via an adhesive layer.
(30) A method of producing a package material, including:
   a mixing step of mixing a composition at a first rotational speed, the composition including a fibrous material that includes waste paper and/or pulp, a binder, sodium hydrogen carbonate, a surfactant, and a water-soluble softener, the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms); and
   a foaming step of foaming the composition at a second rotational speed that is faster than the first rotational speed.
(31) The method of producing a package material according to (30), further including
   a molding step of molding the composition using a mold.
(32) The method of producing a package material according to (30) or (31), further including
   a drying step of drying the foamed composition.
(33) The method of producing a package material according to (31), in which
   the mold contains silicon.
(34) The method of producing a package material according to any one of (30) to (33), in which
   the package material is bonded to a base material via an adhesive layer.

### Reference Signs List

foam material (package material): 1
base layer: 11
first surface of base layer 11: 111
second surface of base layer 11: 112
structure: 12
composition: 10
defibration step: S1
mixing step: S2
foaming step: S3
molding step: S4, S14
drying step: S5, S8, S10, S13
mold: M
porous sheet: P
extruder: T
drier: H
application step: S6, S11
tacking step: S7, S12
composite material (package material): 2
base material (member): 21
attachment step: S9
multilayer structures (package material): 3
foam material layer: 31
adhesive layer: 32

## Claims

1. A package material, comprising:
a fibrous material that includes waste paper and/or pulp;
a binder;
sodium hydrogen carbonate;
a surfactant; and
a water-soluble softener,
the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms).

2. A package material, comprising:
a fibrous material that includes waste paper and/or pulp;
a binder;
sodium hydrogen carbonate;
a surfactant; and
a water-soluble softener,
the softener being a water-soluble polyhydric alcohol having 3 to 15 carbon atoms,
the number of carbon atoms and the number of hydroxyl (OH) groups in a molecular structure of the polyhydric alcohol satisfying a relationship of the number of hydroxy groups < the number of carbon atoms.

3. The package material according to claim 1 or 2, further comprising a discoloration inhibitor.

4. The package material according to claim 3, wherein
the discoloration inhibitor contains alum.

5. The package material according to claim 1 or 2, further comprising an antibacterial agent.

6. The package material according to claim 5, wherein
the antibacterial agent contains potassium sorbate.

7. The package material according to claim 1 or 2, wherein
the binder contains polyvinyl alcohol.

8. The package material according to claim 1 or 2, wherein
the surfactant contains polyoxyethylene alkylether.

9. A package material, comprising:
a fibrous material that includes waste paper and/or pulp;
polyvinyl alcohol;
sodium hydrogen carbonate;
polyoxyethylene alkylether; and
a water-soluble softener,
the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms).

10. The package material according to claim 1, 2, or 9, further comprising
a base layer having a thickness of 1 mm or more, the base layer having a sheet shape having first and second surfaces.

11. The package material according to claim 10, further comprising
a structure layer in which a plurality of structures is formed on the first surface and/or the second surface of the base layer.

12. The package material according to claim 11, wherein
a thickness of the structure layer is larger than a thickness of the base layer.

13. The package material according to claim 12, wherein
the plurality of structure is formed with intervals.

14. The package material according to claim 10, wherein
the package material is bonded to a base material via an adhesive layer.

15. A method of producing a package material, comprising:
a mixing step of mixing a composition at a first rotational speed, the composition including a fibrous material that includes waste paper and/or pulp, a binder, sodium hydrogen carbonate, a surfactant, and a water-soluble softener, the softener being a urea derivative having a chemical structural formula of R¹,R²-N-CO-N-R³,R⁴ (R¹ to R⁴ are each H or a saturated and/or unsaturated hydrocarbon group having 1 to 4 carbon atoms); and
a foaming step of foaming the composition at a second rotational speed that is faster than the first rotational speed.

16. The method of producing a package material according to claim 15, further comprising
a molding step of molding the composition using a mold.

17. The method of producing a package material according to claim 15 or 16, further comprising
a drying step of drying the foamed composition.

18. The method of producing a package material according to claim 16, wherein
the mold contains silicon.

19. The method of producing a package material according to claim 15, wherein
the package material is bonded to a base material via an adhesive layer.
